Europäisches Patentamt

European Patent Office

Office européen des brevets

(19)

(11) Publication number: **0 081 017**
**B1**

# EUROPEAN PATENT SPECIFICATION

(12)

(45) Date of publication of patent specification: **19.03.86**

(21) Application number: **81305754.4**

(22) Date of filing: **07.12.81**

(51) Int. Cl.⁴: **A 01 N 59/00,** A 01 N 25/04,
A 61 K 33/20, A 61 K 7/20

(54) **Germ-killing composition.**

(43) Date of publication of application:
**15.06.83 Bulletin 83/24**

(45) Publication of the grant of the patent:
**19.03.86 Bulletin 86/12**

(84) Designated Contracting States:
**AT BE CH DE FR GB IT LI LU NL SE**

(56) References cited:
**GB-A- 253 918
GB-A- 496 247
US-A-4 084 747**

**CHEMICAL ABSTRACTS, vol. 68, no. 10, 4th
March 1968, pages 4435,4436, no. 45873g,
Columbus, Ohio, USA KAZIMIERZ ASCIK: "A
study on the activation of chlorite solutions by
treatment with acids, esters, ammonium salts,
and other compounds"**

(73) Proprietor: **ALCIDE COMPANY LIMITED
PARTNERSHIP
125 Main Street
Westport Connecticut 06880 (US)**

(72) Inventor: **Alliger, Howard
10 Ponderosa Drive
Melville New York 11476 (US)**

(74) Representative: **Daunton, Derek
94, Market Street
Manchester M1 1PJ (GB)**

Courier Press, Leamington Spa, England.

## Description

This invention relates to germ-killing compositions for treatment of skin diseases such as acne or burns or of other surfaces, comprising two components of which one includes sodium chlorite and the other includes lactic acid.

Chlorine dioxide ($ClO_2$) has been tried in the past for skin disinfection with limited success. One such chlorine dioxide preparation was called Cryoclave, produced by International Dioxide. Chlorine dioxide has, however, had more success as an additive to medicine to inhibit microbial growth in the medicine itself, as disclosed in Canadian Patent Specification No. 955 848, than for its antimicrobial activity on the body.

A common method for using or incorporating chlorine dioxide gas into products has been to dissolve the gas in a liquid to form a solution. This method has a number of drawbacks. The chlorine dioxide gas tends to escape from the solution so that its shelf life is relatively short compared with other skin medications. When the product is applied to the skin or a lesion as a liquid, lack of adhesion of the product to the skin or lesion results in a short contact time. Since fungal diseases and other types of infected lesions usually require many hours or even days of contact for effective treatment thereof, a strict regimen of reapplication would be necessary to ensure adequate therapeutic response.

These objections to the use of chlorine dioxide on the skin can be overcome or substantially alleviated if the gas is incorporated in a gel base. The high viscosity of these gels and their bioadhesion to the skin prevents escape of the gas and also holds the gas in contact with the skin for long periods, particularly in conjunction with the use of a conventional occlusive barrier, such as a plastic film bandage, for the afflicted area.

The process of acidifying sodium chlorite to produce chlorine dioxide within the gel is novel. The gelling material must not only be compatible with the strong oxidizing action of chlorine dioxide, so that there is no complexing with this reactive substance, but must also be compatible with the alkaline sodium chlorite and the acid.

Many substances are not compatible with chlorine dioxide. Most flavours and colouring agents, for example, will react with chlorine dioxide. Canadian Patent Specification No. 955 848 discloses adding these kinds of substances, but this addition reduces the germicidal effectiveness of the chlorine dioxide and thus shortens the shelf life of the product. A further example of incompatibility is hydrogen peroxide, which has been successfully gelled with a glycerin base. Glycerin, however, will react with chlorine dioxide and therefore cannot be used as a thickener for a base with chlorine dioxide producing components. The gelling agent must, of course, be non-toxic, non-irritating, and easily removed from the skin.

Two-component germ-killing compositions of which one component includes sodium chlorite and the other includes lactic acid have already been proposed in United States Patent Specification No. 4084747 of Howard Alliger who is the inventor of the subject matter of this present application. In this prior proposal, the sodium chlorite and lactic acid are present in their respective components as aqueous solutions, and practical experience shows that in this form the composition often does not remain extant in the location where it is required to be effective for sufficient time to achieve its desired germicidal effect.

Accordingly, a primary object of the present invention is to provide an improved two-component germ-killing composition of the kind just referred to which has the advantages that it can readily be applied to the surface to be treated and its components mixed in situ, and which will remain in position and effective over long periods of time, sufficient to ensure the desired germicidal effect, which is not possible with the prior known proposal.

With this object in view, the present invention provides a germ-killing composition of the kind referred to in the introduction hereto characterised in that said two components are adapted to be applied simultaneously, to be mixed in situ, and to adhere to the skin or the surface to be treated, one of the components comprising a first aqueous gel including the sodium chlorite and the other of said components comprising a second aqueous gel including the lactic acid, the gelling material being compatible with both the sodium chlorite and the lactic acid and the strong oxidising action of the reaction product produced when said components are mixed, there being sufficient of said lactic acid to lower the pH of the mixed composition to less than about 7.

The invention further provides a method of treating a surface so as to kill germs thereon using a germ-killing composition comprising two components of which one includes sodium chlorite and the other includes lactic acid characterised in that it comprises applying the two components to the surface to be treated simultaneously and mixing them in situ, one of said components comprising a first aqueous gel including the sodium chlorite and the other of said components comprising a second aqueous gel including the lactic acid, there being sufficient of said lactic acid to lower the pH of said medication to less than about 7.

The invention is illustrated, by way of example, in more detail, by the accompanying drawings in which:—

Figure 1 is a longitudinal sectional view of a dual syringe used in dispensing the germ-killing composition according to one aspect of the invention;

Figure 2 is a schematic diagram showing a dual reservoir applicator and illustrating a second aspect of the invention;

Figure 3 is an exploded perspective view showing a rigid double dispenser and illustrating a third aspect of the invention;

Figure 4 is a sectional detail view of the trigger-type dual dispenser to illustrate a fourth aspect of the invention;

Figure 5 is a schematic view showing another form of dual dispenser to illustrate a fifth aspect of the invention;

Figure 6 is a sectional detail view of a squeeze bottle having a centre separator, to illustrate a sixth aspect of the invention;

Figure 7 is a sectional detail view illustrating means which may be incorporated in a dispenser, such as that of Figure 6 for preventing unequal dispensing of its separate contents;

Figure 8 is a sectional detail view illustrating a modified form of means for controlling the fluid flow of the separate contents of a dispenser such as that of Figure 6 and

Figure 9 is a sectional detail view of yet another form of such a control means.

The present invention is further illustrated by the following examples. All parts and percentages as recited in the examples as well as in the specification are by weight, unless otherwise specified.

Example I

This Example illustrates the production of a germ-killing composition conforming to the invention in the form of a gel comprising two components or parts which are mixed in situ. This gel is most effective in the treatment of burns and is efficacious in killing germs on all surfaces. It is particularly useful for the treatment of acne.

Gel
Part A

| | |
|---|---|
| Thickener—Methyl cellulose (high viscosity. 4,000 mPas) | 8.0% W/W |
| Preservative—Benzyl alcohol | 5.0% W/W |
| Water | 84.7% W/W |
| Lactic acid | 1.3% W/W |

Part B

| | |
|---|---|
| Methyl cellulose (high viscosity, 4,000 mPas) | 8.0% W/W |
| Benzyl alcohol | 5.0% W/W |
| Water | 86.8% W/W |
| Sodium chlorite | 0.2% W/W |

The procedure for preparing Part A is as follows:

Heat one-half of the 85.7% water to boiling point and add methyl cellulose, with constant agitation. Add the balance of the water as "ice water" (i.e. at a temperature of about 5°C.) containing the benzyl alcohol and the lactic acid. Stir initially to blend the ingredients; then allow them to cool to room temperature with occasional stirring until the composition gels.

The procedure for preparing Part B is the same as for Part A, except that sodium chlorite is involved in the place of the lactic acid.

The parts A and B are then packaged in separate tubes with directions to mix equal parts.

# 0 081 017

Example II
This invention may also be used in producing a toothpaste as described hereinbelow.

Striped toothpaste

| | | |
|---|---|---|
| Thickener— | Veegum F | 1.25% W/W |
| Thickener— | Methyl cellulose (Medium viscosity, 400 mPas) | 0.70% W/W |
| | Water | 24.00% W/W |
| Humectant— | Sorbitol (70% aqueous solution) | 25.00% W/W |
| Abrasive— | Dicalcium phosphate dihydrate | 45.00% W/W |
| | Mint flavour | 1.00% W/W |
| Detergent— | Sodium lauryl sulphate | 1.50% W/W |
| Preservative— | Methyl paraben | 0.25% W/W |
| | Lactic acid | 1.30% W/W |

All of the Thickener may be Methyl Cellulose.

Procedure: Dry blend the Veegum F and Methyl Cellulose. Add this blend to the water (heated to 70°C.) slowly, agitating continuously until uniform, and cool to room temperature. Add the Sorbitol solution and Dicalcium Phosphate Dihydrate in alternate portions to the Veegum F/Methyl Cellulose mixture until smooth. Then add the Lactic Acid, Mint Flavour, Methyl Paraben and Sodium Lauryl Sulphate in order, blending each thoroughly (using gentle agitation) with the Sodium Lauryl Sulphate to avoid incorporation of air. This produces a white tooth paste.
In a separate operation, prepare the following gel:

| | | |
|---|---|---|
| Thickener— | Methyl cellulose (high viscosity, 4000 mPas) | 8.0% W/W |
| Preservative— | Benzyl alcohol | 5.0% W/W |
| Colour— | Erythrosin J (F.S. & C.) | 1.0% W/W |
| | Water | 85.8% W/W |
| | Sodium chlorite | 0.2% W/W |

Procedure: Heat one-half of the water to boiling and add the Methyl Cellulose with constant agitation. Add the balance of the water as "ice water" (about 5°C.), containing the Benzyl Alcohol, Erythrosin J (Cherry-red dye) and Sodium Chlorite. Stir initially to blend the ingredients; then allow the blend to cool to room temperature with occasional stirring until gelled.
Package the white toothpaste and the red gel in plastic tubes with separate compartments for each component, but with adjacent extrusion orifices providing for the toothpaste to emerge as a single stream and for the gel to emerge by way of several small orifices arranged around the periphery of the toothpaste orifice so that a striped effect is produced upon extrusion. Such tubes are commercially available.
The following description refers to the accompanying drawings wherein like reference numerals designate similar parts throughout the various views.
Each figure illustrates a respective dispenser or like device for dispensing the two parts or components of a germ-killing preparation of the invention, comprising respectively the sodium chlorite and the lactic acid as above discussed.

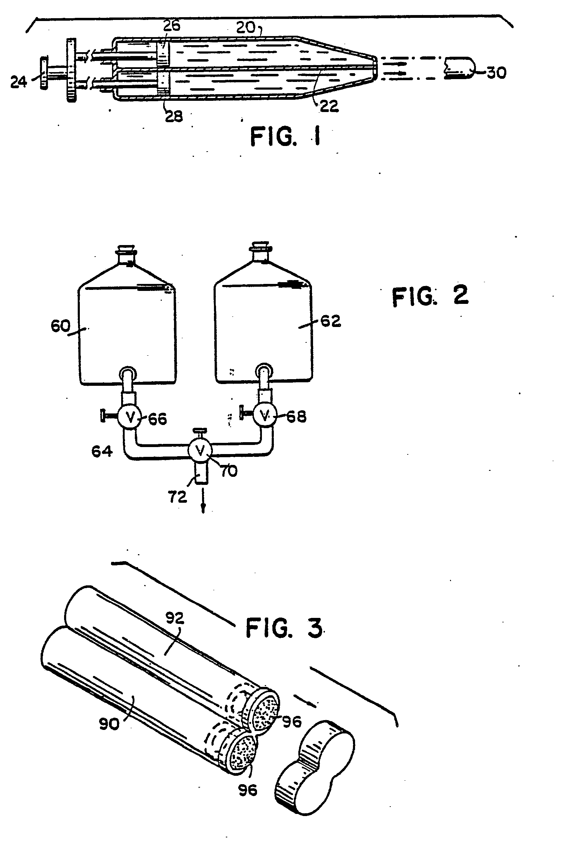

In Figure 1 there is shown a dual syringe especially adapted for use in dispensing a germ-killing composition in accordance with the invention, in the form of gels and comprises a syringe housing 20 provided with a partition or separator 22. A single actuator 24 controls dual plungers 26 and 28 which serve to expel the separate contents from the housing 20 simultaneously and in equal amounts as indicated at 30 as a material or composition ready to be spread evenly on a surface to be treated.
Figure 2 shows an arrangement comprising two reservoirs 60 and 62 interconnected by tubing 64 with

4

separate control valves 66 and 68 and provided with a shut-off valve 70 for controlling fluid flow in the direction of arrow 72.

Figure 3 shows a dual applicator including two containers 90 and 92 filled respectively with the two different components and each having a sponge applicator head 94 and 96 for simultaneously applying the two components to form the germ-killing composition. The two containers 90 and 92 are bonded or otherwise joined together.

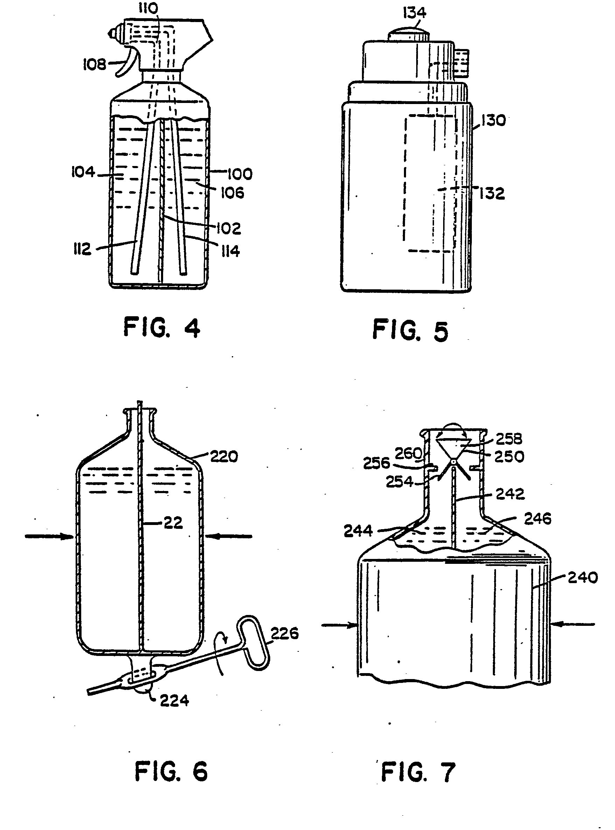

In Figure 4 there is shown a trigger-actuated dispenser in which a container 100 is provided with a divider 102 for maintaining components 104 and 106 separate. When trigger 108 of conventional pump actuator 110 is depressed, the components are sucked through the respective tubes 112 and 114 and are sprayed simultaneously to form the germ-killing composition on a receiving surface, not shown.

Figure 5 shows a dual dispenser, similar to a foam shaving cream dispenser marketed by the Gillette Company, in which an outer container 130 encloses a first component and an inner container 132 which contains a second component which is thereby separated from the first component. Both such components are under gas pressure and when actuator 134 is depressed, both components are simultaneously dispensed as a germ-killing composition as a result of the gaseous pressure.

In Figure 6 there is shown a tube or container 220 including a separator 22 whereby the two components forming the germ-killing composition of the invention are kept apart. Provided on the bottom of the tube or container 220 is a tab 224 on which a wind-up key 226 can be used to expel the contents of the container 220 simultaneously in equal proportions.

Referring now to Figure 7, this shows a container 240 having a divider 242 therein. The container 240 is thereby adapted to contain two different gels 244 and 246 and flow of the gel 244 through its passage through neck 260 of the container 240 without corresponding flow of the gel 246 through its passage has the effect of actuating a pivotal valve member 250 to prevent passage of the gel 244 and *vice versa*. For example, if gel 244 flows and gel 246 does not, vane 254 moves into valve-closed engagement with valve seat 256 while valve head 258 contacts the neck 260 to prevent flow of the gel 244. Even flow of both gels allows the vanes to stay in the illustrated position and permit equal delivery.

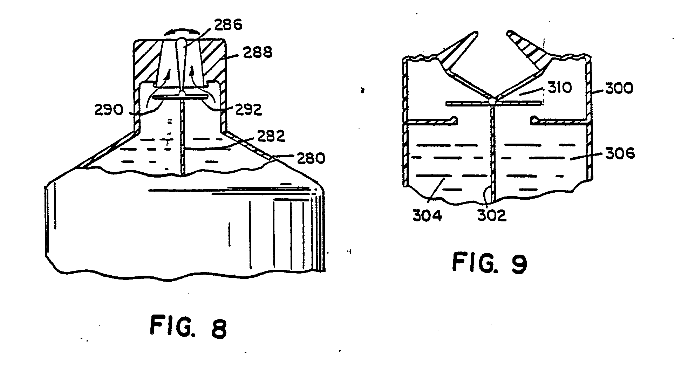

Figure 8 shows another form of container 280 incorporating a separator 282 as well as a guide 286 at neck 288 of the container 280 and is so arranged that the guide 286 will lock upon movement or flow of one only of the gels within the container so as to cause an appropriate one of the valve vanes 290 and 292 to prevent further flow until the delivery of both gels is equalized.

In Figure 9 there is shown another modified form of dispenser comprising container 300 having a divider 302 therein for separating compartments 304 and 306, containing different gels, from each other. Pivoted to the divider 302 is a valve assembly 310 which includes means for preventing unequal flow of the separate gels.

As has already been mentioned, each of the illustrated dispensers is intended to be loaded separately with the respective sodium chlorite-containing and lactic acid-containing components of the germ-killing preparations of the invention, for these components to be simultaneously dispensed and mixed to form the inventive composition in situ.

## Claims

1. A germ-killing composition for treatment of skin diseases such as acne and burns or of other surfaces, comprising two components of which one includes sodium chlorite and the other includes lactic acid characterised in that said two components are adapted to be applied simultaneously, to be mixed in situ and to adhere to the skin or the surface to be treated, one of the components comprising a first aqueous gel including the sodium chlorite and the other of said components comprising a second aqueous gel including the lactic acid, the gelling material being compatible with both the sodium chlorite and the lactic acid and the strong oxidising action of the reaction product produced when said components are mixed, there being sufficient of said lactic acid to lower the pH of the mixed composition to less than about 7.

2. A composition according to claim 1, further characterised in that said first component includes 0.2% by weight of the sodium chlorite and said second component includes 1.3% by weight of the lactic acid.

3. A composition according to claim 1 or 2 further characterised in that said first and second components each contain a thickener and a preservative.

4. A composition according to claim 3 further characterised in that said thickener is methyl cellulose and said preservative is benzyl alcohol.

5. A composition according to claim 4 further characterised in that said first component and said second component each include approximately 8% by weight of methyl cellulose and approximately 5% by weight of benzyl alcohol.

6. A method of treating a surface so as to kill germs thereon using a germ-killing composition comprising two components of which one includes sodium chlorite and the other includes lactic acid characterised in that it comprises applying the two components to the surface to be treated simultaneously and mixing them in situ, one of said components comprising a first aqueous gel including the sodium chlorite and the other of said components comprising a second aqueous gel including the lactic acid, there being sufficient of said lactic acid to lower the pH of said medication to less than about 7.

# 0 081 017

**Patentansprüche**

1. Keimtötende Zusammensetzung zur Behandlung von Hautkrankheiten, wie Akne, und Verbrennungen oder von anderen Oberflächen, die zwei Komponenten umfaßt, von denen eine Natriumchlorit und die andere Milchsäure enthält, dadurch gekennzeichnet, daß die beiden Komponenten so angepaßt sind, daß sie gleichzeitig angewendet, an Ort und Stelle gemischt werden können und auf der Haut oder der zu behandelnden Oberfläche haften, wobei eine der Komponenten ein erstes wäßriges Gel umfaßt, das das Natriumchlorit enthält, und die andere der Komponenten ein zweites wäßriges Gel umfaßt, das die Milchsäure enthält, wobei das gelbildende Material sowohl mit dem Natriumchlorit als auch mit der Milchsäure und der starken Oxydationswirkung des Reaktionsprodukts kompatibel ist, das entsteht, wenn die Komponenten gemischt werden, wobei die Menge der Milchsäure ausreicht, um den pH-Wert der gemischten Zusammensetzung auf weniger als ungefähr 7 zu senken.

2. Zusammensetzung nach Anspruch 1, dadurch gekennzeichnet, daß die erste Komponente 0,2 Gew.-% des Natriumchlorits und die zweite Komponente 1,3 Gew.-% der Milchsäure enthält.

3. Zusammensetzung nach Anspruch 1 oder 2, dadurch gekennzeichnet, daß die erste und die zweite Komponente jeweils ein Verdickungsmittel und ein Konservierungsmittel enthalten.

4. Zusammensetzung nach Anspruch 3, dadurch gekennzeichnet, daß das Verdickungsmittel Methylzellulose und das Konservierungsmittel Benzylalkohl ist.

5. Zusammensetzung nach Anspruch 4, dadurch gekennzeichnet, daß die erste Komponente und die zweite Komponente jeweils ca. 8 Gew.-% Methylzellulose und ca. 5 Gew.-% Benzylalkohol enthalten.

6. Verfahren zur Behandlung einer Oberfläche, um keime darauf abzutöten, unter Verwendung einer keimtötenden, zwei Komponenten umfassenden Zusammensetzung, wobei die eine Komponente Natriumchlorit und die andere Milchsäure enthält, dadurch gekennzeichnet, daß es die gleichzeitige Aufbringung der beiden Komponenten auf die zu behandelnde Oberfläche und ihre Mischung an Ort und Stelle umfaßt, wobei eine der Komponenten ein erstes wäßriges Gel umfaßt, das das Natriumchlorit enthält, und die andere der Komponenten ein zweites wäßriges Gel umfaßt, das die Milchsäure enthält, und die Menge der Milchsäure ausreicht, um den pH-Wert des Heilmittels auf weniger als ungefähr 7 zu senken.

**Revendications**

1. Composition germicide pour traitement des maladies de la peau, telles que acné et brûlures, ou d'autres surfaces, comprenant deux composants dont l'un contient du chlorite de sodium et l'autre contient de l'acide lactique, caractérisée par le fait que lesdits deux composants sont susceptibles d'être appliqués simultanément, d'être mélangés in situ et d'adhérer à la peau ou à la surface à traiter, un des composants comprenant un premier gel aqueux contenant le chlorite de sodium et l'autre composant comprenant un second gel aqueux contenant l'acide lactique, la matière gélifiante étant compatible à la fois avec le chlorite de sodium et l'acide lactique et la forte action oxydante du produit de réaction formé quand lesdits composants sont mélangés, ledit acide lactique étant en quantité suffisante pour abaisser le pH de la composition mélangée au-dessous d'environ 7.

2. Composition selon la revendication 1, caractérisée en outre par le fait que ledit premier composant contient 0,2% en poids du chlorite de sodium et ledit second composant contient 1,3% en poids de l'acide lactique.

3. Composition selon la revendication 1 ou 2, caractérisée par le fait que lesdits premier et second composants contiennent chacun un épaississeur et un conservateur.

4. Composition selon la revendication 3, caractérisé en outre par le fait que ledit épaississeur est la méthylcellulose et ledit conservateur est l'alcool benzylique.

5. Composition selon la revendication 4, caractérisée en outre par le fait que lesdits premier et second composants contiennent chacun approximativement 8% en poids de méthylcellulose et approximativement 5% en poids d'alcool benzylique.

6. Méthode pour traiter une surface de manière à y tuer des germes, en utilisant une composition germicide comprenant deux composants dont l'un contient du chlorite de sodium et l'autre contient de l'acide lactique, caractérisée par le fait qu'on applique les deux composants sur la surface à traiter simultanément et on les mélange in situ, un des composants comprenant un premier gel aqueux contenant le chlorite de sodium et l'autre composant comprenant un second gel aqueux contenant l'acide lactique, ledit acide lactique étant en quantité suffisante pour abaisser le pH dudit médicament au-dessous d'environ 7.

FIG. 1

FIG. 2

FIG. 3

1

FIG. 4

FIG. 5

FIG. 6

FIG. 7

FIG. 8

FIG. 9